# EUROPÄISCHE PATENTSCHRIFT

(11) **EP 0 492 355 B1**
(45) Veröffentlichungstag und Bekanntmachung des Hinweises auf die Patenterteilung: **12.10.1994**
(21) Anmeldenummer: 91121568.9
(22) Anmeldetag: 17.12.1991
(51) Int. Cl.: B60J 5/04

(54) **Tür für Fahrzeuge, insbesondere Kraftfahrzeuge**
Vehicle door, especially motor vehicle door
Porte de véhicule, en particulier pour véhicule automobile

(30) Priorität: 20.12.1990 DE 4040886
(43) Veröffentlichungstag der Anmeldung: 01.07.1992
(73) Patentinhaber: Adam Opel Aktiengesellschaft, 65428 Rüsselsheim (DE)
(72) Erfinder: Matthes, Peter, Ing. (grad.), W-6501 Nieder-Olm (DE)
(74) Vertreter: Bergerin, Ralf, Dipl.-Ing.

(56) Entgegenhaltungen:
- DE-A- 3 608 506
- US-A- 2 176 192
- US-A- 2 438 185

## Beschreibung

Die Erfindung bezieht sich auf eine Tür für Fahrzeuge, insbesondere Kraftfahrzeuge, mit einem Türgerippeausschnitt auf der Innenseite der Tür und mit einem Aggregateträger zur Aufnahme von im Innern der Tür anzuordnenden Aggregaten, wobei der Aggregateträger am Rand des Türgerippeausschnitts, diesen dabei verschließend, befestigbar ist und als Aggregateträger das beim Ausschneiden des Türgerippes anfallende Material dient.

Die vorgenannte Grundkonzeption, auch als "Türmodul" bezeichnet, ist herstellungsbedingt. Sie beinhaltet die Komplettierung der lackierten Rohbautür außerhalb der Rohkarosserie auf flexiblen Transportsystemen. Für den Innenraum der Tür bestimmte Aggregate, wie z. B. das Fensterhebesystem, werden auf dem Aggregateträger montiert (sogenannter Türinnenmodul). Anschließend wird der Aggregateträger am Türgerippe, in dem sich ein entsprechender Ausschnitt befindet, angebracht.

Es ist im Karosseriebau allgemein bekannt (vgl.z. B. die US-PS 2,284,697 und die AT-PS 191 238), den Abfall beim Ausstanzen von Blechteilen dadurch gering zu halten, daß man die ausgestanzten Teile - als Ganzes oder nach geeigneter Weiterbearbeitung - anderweitig wieder verwendet. Durch die Verwendung des Türgerippeausschnitts als Aggregateträger lassen sich also im vorliegenden Fall erhebliche Materialkosten einsparen.

Der bisherige Stand der Technik ist indessen noch mit beträchtlichen Unzulänglichkeiten behaftet. So gehen nach dem aus der oben angegebenen US-PS 2,284,697 entnehmbaren Verfahren immernoch nahezu 50 % der aus dem Seitenwandteil der Karosserie ausgeschnittenen Blechtafel als Abfall verloren bzw. kann nur noch zur Herstellung von Kleinteilen Verwendung finden. Das bekannte Verfahren nach der US-PS muß also noch als vergleichsweise unwirtschaftlich bezeichnet werden.

Beim Gegenstand der anderen, ebenfalls bereits oben genannten Druckschrift (AT-PS 191 238) werden zwar die vorerwähnten Nachteile weitgehend vermieden. Jedoch bedürfen auch hier die korrespondierenden Ränder des Karosserieausschnitts und der aus dem ausgeschnittenen Karosserieblech gefertigen Tür noch einer Nachbearbeitung.

Aufgabe der vorliegenden Erfindung ist es, eine vollständige Wiederverwendung des aus dem Türgerippe ausgeschnittenen Blechmaterials als Aggregateträger zu erreichen, und zwar ohne anschließende formende Weiterbearbeitung der korrespondierenden Ränder von Türgerippeausschnitt und Aggregateträger.

Gemäß der Erfindung wird die Aufgabe bei einer Tür der eingangs bezeichneten Art dadurch gelöst, daß Türgerippeausschnitt und Aggregateträger an ihren Rändern beim Ausschneidearbeitsgang erzeugte, jeweils einstückig an das Türgerippe bzw. an den Aggregateträger angeformte Befestigungslaschen aufweisen, wobei zwischen je zwei benachbarten Befestigungslaschen am Türgerippe liegende Aussparungen die Befestigungslaschen des Aggregateträgers und - umgekehrt - zwischen je zwei benachbarten Befestigungslaschen am Aggregateträger liegende Aussparungen die Befestigungslaschen des Türgerippes bilden.

Die Erfindung ermöglicht eine einfache Befestigung des Aggregateträgers am Türgerippe, indem lediglich die Befestigungslaschen des Aggregateträgers mit denen am Türgerippeausschnitt zur Deckung gebracht zu werden brauchen. Als Verbindungselemente können z. B. Schrauben dienen.

Nach einer bevorzugten Ausführungsform der Erfindung haben Türgerippeausschnitt und Aggregateträger eine rechteckige Grundform, und den am Rand des betreffenden Bauteils ausgebildeten Befestigungslaschen liegen jeweils am entgegengesetzten Rand desselben Bauteils ausgebildete Aussparungen gegenüber, derart, daS der Aggregateträger in einer um 180° um eine auf seiner Grundfläche senkrecht stehende Achse gedrehten Position an dem Türgerippeausschnitt befestigbar ist.

Der Vorteil besteht darin, daß es zur Befestigung keiner vorherigen seitlichen Verschiebung des Aggregateträgers mit Bezug auf den Türgerippeausschnitt bedarf und daß letzterer somit vollständig von dem montierten Aggregateträger abgedeckt und verschlossen zu werden vermag.

Vorzugsweise besitzen die Befestigungslaschen und die sich zwischen ihnen erstreckenden Aussparungen gleiche oder im wesentlichen gleiche Flächengrößen. Dadurch ist eine vollständige Überlappung der einander zugeordneten Befestigungslaschen von Türgerippeausschnitt und Aggregateträger gewährleistet.

Was auf dieser Basis die Gestaltung der Befestigungslaschen und Aussparungen im einzelnen anbelangt, so sollte sich diese an den Möglichkeiten der spanlosen Blechbearbeitung (z. B. durch Ausstanzen) orientieren. Es ist deshalb im Sinne einer fertigungstechnisch besonders einfachen Verwirklichung der Erfindung zweckmäßig, wenn die Befestigungslaschen und die sich zwischen ihnen erstreckenden Aussparungen rechteckförmige Konturen aufweisen. Es sind aber auch andersartige, z. B. trapez- oder dreieckförmige Formgebungen der Befestigungslaschen und der Aussparungen zwischen den Befestigungslaschen denkbar.

Vorzugsweise sind Befestigungslaschen und Aussparungen an allen vier Rändern des Türgerippeausschnitts bzw. des Aggregateträgers ausgebildet. Hierdurch ist eine optimale Befestigung des Aggregateträgers am Türgerippe gewährleistet.

In speziellen Fällen mag es aber auch ausreichen, Befestigungslaschen und Aussparungen nur an zwei gegenüberliegenden Rändern des Türgerippeausschnitts bzw. des Aggregateträgers auszubilden.

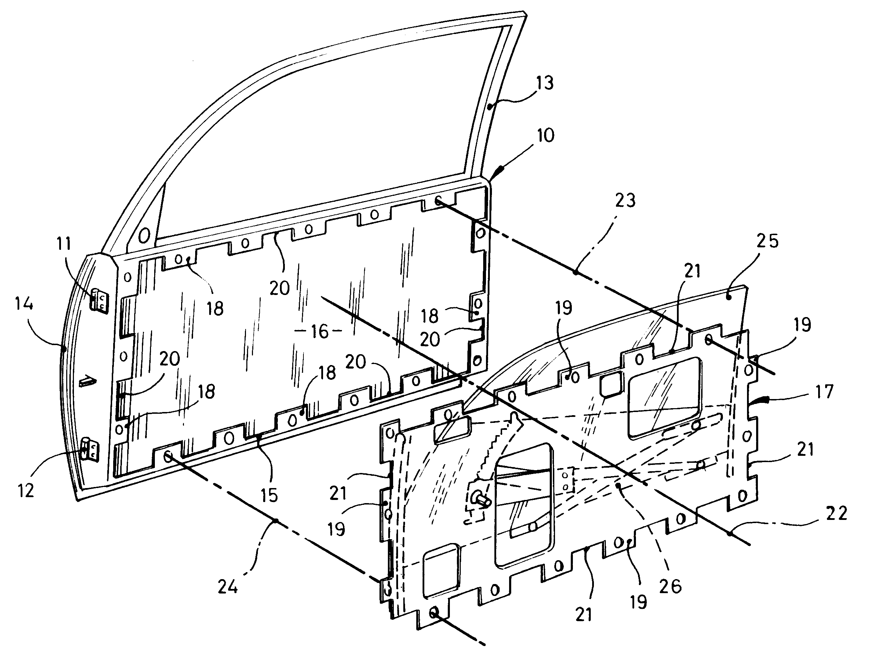

Zur näheren Erläuterung der Erfindung dient ein Ausführungsbeispiel, das in der Zeichnung dargestellt und nachstehend ausführlich beschrieben ist. Die Zeichnung zeigt eine perspektivische Innenansicht einer Kraftfahrzeug-Seitentür mit demontiertem bzw. noch nicht montiertem Aggregateträger.

Es bezeichnet 10 ein als Blechkonstruktion ausgeführtes Türgerippe mit Scharnieren 11, 12 und Fensterrahmen 13. Der Türkörper wird, wie üblich, im wesentlichen durch ein Außenblech 14 und ein Innenblech 15 gebildet. Zwischen den Türblechen 14, 15 erstreckt sich ein Hohlraum, der zur Unterbringung der üblichen Aggregate (z. B. Fensterhebesystem) vorgesehen ist.

Wie die Zeichnung weiterhin erkennen läßt, ist in das Innenblech 15 ein Türgerippeausschnitt 16 eingestanzt. Das hierbei anfallende Blechteil ist separat dargestellt und mit 17 beziffert. Türgerippeausschnitt 16 und Blechteil 17 weisen insgesamt Rechteckform auf, besitzen jedoch an ihren vier Rändern Befestigungslaschen 18 bzw. 19 und dazwischenliegende Aussparungen 20 bzw. 21. Die Befestigungslaschen 18, 19 und die Aussparungen 20, 21 sind etwa gleich groß und rechteckförmig ausgebildet. Türgerippeausschnitt 16 und - entsprechend - Blechteil 17 sind so gestaltet, daß jeder Befestigungslasche 18 (bzw. 19) am gegenüberliegenden Rand eine Aussparung 20 (bzw. 21) gegenübersteht. Wird nun das Blechteil 17 um eine senkrecht auf seiner Ebene stehende Achse 22 um 180° gedreht (in dieser Position ist das Blechteil 17 dargestellt), so ist - wie durch strichpunktierte Linien 23, 24 angedeutet - jeder Befestigungslasche 18 des Türgerippeausschnitts 16 eine entsprechende Befestigungslasche 19 am Blechteil 17 zugeordnet. (Entsprechendes gilt auch für die Aussparungen 20, 21.)

Die Zeichnung zeigt des weiteren, daß das Blechteil 17 als Aggregateträger für die üblichen innerhalb des Türinnenraums anzuordnenden Aggregate fungiert. Hiervon ist ein Hebesystem für ein Türfenster 25 in gestrichelten Linien angedeutet und mit 26 bezeichnet. Der Aggregateträger 17 mit den zugehörigen Aggregaten (z. B. Fensterhebesystem 26) wird separat vom Türgerippe 10 auf einem flexiblen Transportsystem vormontiert und anschließend (als sog. Türinnenmodul) an dem Türgerippe 10 - den Ausschnitt 16 dabei verschließend - angebracht. Die Befestigung - an den hierfür vorgesehenen Befestigungslaschen 18, 19 - kann in einfacher Weise durch Blechschrauben erfolgen.

## Patentansprüche

1. Tür für Fahrzeuge, insbesondere Kraftfahrzeuge, mit einem Türgerippeausschnitt (16) auf der Innenseite der Tür und mit einem Aggregateträger (17) zur Aufnahme von im Innern der Tür anzuordnenden Aggregaten, wobei der Aggregateträger am Rand des Türgerippeausschnitts, diesen dabei verschließend, befestigbar ist und als Aggregateträger das beim Ausschneiden des Türgerippes (10) anfallende Material dient, dadurch gekennzeichnet, daß Türgerippeausschnitt (16) und Aggregateträger (17) an ihren Rändern beim Ausschneidearbeitsgang erzeugte, jeweils einstückig an das Türgerippe (10) bzw. an den Aggregateträger (17) angeformte Befestigungslaschen (18 bzw. 19) aufweisen, wobei zwischen je zwei benachbarten Befestigungslaschen (18) am Türgerippe (10) liegende Aussparungen (20) die Befestigungslaschen (19) des Aggregateträgers (17) und - umgekehrt - zwischen je zwei benachbarten Befestigungslaschen (19) am Aggregateträger (17) liegende Aussparungen (21) die Befestigungslaschen (18) des Türgerippes (10) bilden.

2. Tür nach Anspruch 1,
dadurch gekennzeichnet, daß Türgerippeausschnitt (16) und Aggregateträger (17) eine rechteckige Grundform haben und daß den am Rand des betreffenden Bauteils (10 bzw. 17) ausgebildeten Befestigungslaschen (18 bzw. 19) jeweils am entgegengesetzten Rand desselben Bauteils ausgebildete Aussparungen (20 bzw. 21) gegenüberliegen, derart, daß der Aggregateträger (17) in einer um 180° um eine auf seiner Grundfläche senkrecht stehende Achse (22) gedrehten Position an dem Türgerippeausschnitt (16) befestigbar ist.

3. Tür nach Anspruch 1 oder 2,
dadurch gekennzeichnet, daß die Befestigungslaschen (18, 19) und die sich zwischen ihnen erstreckenden Aussparungen (20 bzw. 21) rechteckige Konturen aufweisen.

4. Tür nach Anspruch 1 oder 2,
dadurch gekennzeichnet, daß die Befestigungslaschen und die sich zwischen ihnen erstreckenden Aussparungen trapezförmige Konturen aufweisen.

5. Tür nach Anspruch 1 oder 2,
dadurch gekennzeichnet, daß die Befestigungslaschen und die sich zwischen ihnen erstreckenden Aussparungen dreieckförmige Konturen aufweisen.

6. Tür nach einem oder mehreren der vorstehenden Ansprüche, dadurch gekennzeichnet, daß die Befestigungslaschen (18, 19) und die sich zwischen ihnen erstreckenden Aussparungen (20 bzw. 21) gleiche oder im wesentlichen gleiche Flächengrößen aufweisen.

7. Tür nach einem oder mehreren der vorstehenden Ansprüche, dadurch gekennzeichnet, daß Befestigungslaschen (18 bzw. 19) und Aussparungen (20 bzw.21) an allen vier Rändern des Türgerippeausschnitts (16) bzw. des Aggregateträgers (17) ausgebildet sind.

8. Tür nach einem oder mehreren der Ansprüche 1 - 6, dadurch gekennzeichnet, daß Befestigungslaschen (18 bzw. 19) und Aussparungen (20 bzw. 21) nur an zwei gegenüberliegenden Rändern des Türgerippeausschnitts (16) bzw. des Aggregateträgers (17) ausgebildet sind.

## Claims

1. Door for vehicles, especially motor vehicles, with a door frame cut-out section (16) on the inside of the door and with an aggregate support (17) for receiving aggregates to be arranged on the inside of the door, in which the aggregate support can be fixed to the edge of the door frame cut-out section, thus closing the same, and the aggregate support is formed of the material produced as a result of cutting out the door frame (10), **characterised** in that the door frame cut-out (16) and the aggregate support (17) each have one-piece fixing tongues (18 or 19), produced on their edges during the cut-out process, formed on the door frame (10) or the aggregate support (17), in which the fixing tongues (19) of the aggregate support (17) are formed by the recesses (20) of the door frame (10) in each case situated between two adjacent fixing tongues (18) and - conversely - the fixing tongues (18) of the door frame (10) are formed by the recesses (21) of the aggregate support (17) in each case situated between two adjacent fixing tongues (19).

2. Door according to claim 1, **characterised** in that the door frame cut-out section (16) and the aggregate support (17) have a rectangular basic shape and that fixing tongues (18 or 19) formed on the edge of the relevant part (10 or 17) are arranged opposite recesses (20 or 21) formed in each case on the opposite edge of the same part in such a way that the aggregate support (17) can be fixed to the door frame cut-out section (16) in a position turned through 180° about an axis (22) extending perpendicularly to its base surface.

3. Door according to claim 1 or 2, **characterised** in that the fixing tongues (18, 19) and the recesses (20 or 21) extending inbetween have rectangular contours.

4. Door according to claim 1 or 2, **characterised** in that the fixing tongues and the recesses extending inbetween have trapezoidal contours.

5. Door according to claim 1 or 2, **characterised** in that the fixing tongues and the recesses extending inbetween have triangular-shaped contours.

6. Door according to one or more of the preceding claims, **characterised** in that the fixing tongues (18, 19) and the recesses (20 or 21) extending inbetween have equal or substantially equal surface areas.

7. Door according to one or more of the preceding claims, **characterised** in that the fixing tongues (18 or 19) and recesses (20 or 21) are formed on all four edges of the door frame cut-out section (16) or the aggregate support (17).

8. Door according to one or more of the claims 1 - 6, **characterised** in that the fixing tongues (18 or 19) and recesses (20 or 21) are formed on only two oppositely arranged edges of the door frame cut-out section (16) or the aggregate support (17).

## Revendications

1. Porte pour véhicule, notamment pour véhicule automobile, comportant une découpe (16) d'ossature de porte dans la face intérieure de la porte ainsi qu'un support (17) d'accessoires destiné à recevoir des accessoires montés à l'intérieur de la porte, le support d'accessoires étant fixé sur le bord de la découpe de l'ossature de porte et fermant celle-ci et le matériau provenant du découpage de l'ossature (10) de la porte servant de support d'accessoires, caractérisé par le fait que la découpe (16) de l'ossature de porte et le support d'accessoires (17) sont pourvus au niveau de leurs bords de pattes de fixation (18 et 19) formant un ensemble monobloc avec l'ossature de porte (10) ou avec le support d'accessoires (17) et produites lors de l'opération de découpage, des évidements (20) situés entre deux pattes de fixation (18) consécutives de l'ossature de porte (10) constituant les pattes de fixation (19) du support d'accessoires (17) et, inversement, des évidements (21) situés entre deux pattes de fixation (19) consécutives du support d'accessoires (17) constituant les pattes de fixation (18) de l'ossature de porte (10).

2. Porte selon la revendication 1, caractérisée par le fait que la forme de base de la découpe (16) d'ossature de porte et du support d'accessoires (17) est un rectangle et que des évidements (20 ou 21) aménagés dans le bord de l'élément (10 ou 17) considéré sont disposés chaque fois en regard de pattes de fixation (18 ou 19) dudit élément, de telle sorte que le support d'accessoires (17) se monte dans la découpe de porte (16) dans une position correspondant à une rotation de 180° autour d'un axe (22) perpendiculaire à sa surface.

3. Porte selon revendication 1 ou 2, caractérisée par le fait que les pattes de fixation (18, 19) et les évidements (20 et 21) aménagés entre celles-ci ont la forme de rectangles.

4. Porte selon revendication 1 ou 2, caractérisée par le fait que les pattes de fixation et les évidements aménagés entre celles-ci ont la forme de trapèzes.

5. Porte selon revendication 1 ou 2, caractérisée par le fait que les pattes de fixation et les évidements aménagés entre celles-ci ont la forme de triangles.

6. Porte selon une plusieurs des revendications précédentes, caractérisée par le fait que les pattes de fixation (18, 19) et les évidements (20 et 21) aménagés entre celles-ci ont même ou sensiblement même surface.

7. Porte selon une plusieurs des revendications précédentes, caractérisée par le fait que des pattes de fixation (18, 19) et les évidements (20 et 21) sont aménagés sur les quatre bords de la découpe (16) d'ossature de porte ou du support d'accessoires (17).

8. Porte selon une plusieurs des revendications précédentes, caractérisée par le fait que des pattes de fixation (18, 19) et les évidements (20 et 21) ne sont aménagés que sur deux bords situés en vis-à-vis de la découpe (16) d'ossature de porte ou du support d'accessoires (17).
